## Europäisches Patentamt

## European Patent Office

## Office européen des brevets

(19)

(11) Veröffentlichungsnummer: **0 130 446**

**B1**

(12) **EUROPÄISCHE PATENTSCHRIFT**

(45) Veröffentlichungstag der Patentschrift:
**12.08.87**

(51) Int. Cl.⁴: **A 23 G 3/20,** A 23 G 3/06

(21) Anmeldenummer: **84106906.5**

(22) Anmeldetag. **16.06.84**

(54) **Verfahren und Vorrichtung zur Bildung eines in einen Kegelroller o. dgl. einzuführenden Massestranges für die Herstellung von Hartbonbons mit kaschiertem Kern.**

(30) Priorität: **30.06.83 DE 3323551**

(43) Veröffentlichungstag der Anmeldung:
**09.01.85 Patentblatt 85/2**

(45) Bekanntmachung des Hinweises auf die Patenterteilung:
**12.08.87 Patentblatt 87/33**

(84) Benannte Vertragsstaaten:
**GB IT NL**

(56) Entgegenhaltungen:
**FR-A-1 355 832**
**FR-A-1 442 989**
**FR-A-2 118 768**
**FR-A-2 342 030**
**GB-A-1 599 027**
**US-A-1 522 738**
**US-A-3 156 195**
**US-A-3 272 152**

(73) Patentinhaber: **Otto Hänsel GmbH, Lister Damm 19, D-3000 Hannover (DE)**

(72) Erfinder: **Vilchez, José, Fritz- Beindorff- Allee 9, D-3000 Hannover 1 (DE)**
Erfinder: **Mergelsberg, Reinhard, Andrae Strasse 11, D-3008 (Horst) Garbsen 6 (DE)**
Erfinder: **Schlüter, Jürgen, Kleiner Ranzen 10, D-3255 Lauenau OT Feggendorf (DE)**
Erfinder: **Hagen, Hartmut, Sophienstrasse 2, D-3210 Elze 1 (DE)**

(74) Vertreter: **Patentanwälte Dipl.- Ing. Rudolf Bibrach Dipl.- Ing. Elmar Rehberg, Pütterweg 6 Postfach 738, D-3400 Göttingen (DE)**

LIBER, STOCKHOLM 1987

### Beschreibung

Die Erfindung betrifft ein Verfahren zur Bildung eines in einen Kegelroller einzuführenden Massestranges für die Herstellung von Hartbonbons mit kaschiertem Kern, der aus einem mit Füllmasse versehenen Zuckermasseband, welches zu einem geschlossenen Schlauch bzw. Rolle umgefaltet ist, gebildet ist, und zeigt gleichzeitig eine für die Durchführung des Verfahrens bestimmte Vorrichtung.

Bisher erfolgte die Fertigung, indem von einem gekochten Zuckersatz der Anteil, der für die Decke des Bonbons benötigt wird, abgezweigt und temperiert wird. Die restliche Zuckermasse wird über mechanisch arbeitende Ziehmaschinen belüftet und dann auf einem Wärmetisch zu einer meist rechteckigen Fläche ausgezogen. Auf diese Fläche wird die gewünschte Menge an Füllmasse gleichmäßig aufgestrichen und dann die bestrichene Zuckermasse so gefaltet, daß die Füllmasse von der Zuckermasse volleingeschlossen wird. Durch erneutes Ausziehen auf die Anfangsgröße -nach dem Falten- entsteht eine Verjüngung der Schichten an Zuckermasse und Füllmasse, was durch abermaliges Falten und Ausziehen beliebig wiederholt werden kann. Auf diese Weise entstehen eine entsprechende Anzahl von Lagen an Zuckermasse bzw. Füllmassen, die voneinander eindeutig getrennt sein müssen und möglichst dünnschichtig ausgezogen sein sollen. Der so kaschierte Zuckersatz wird dann in die bereitgelegte und zu einer Rechteckfläche ausgezogenen Deckmasse eingelegt und von allen Seiten rundum verschlossen. Anschließend wird der gesamte Zuckersatz, bestehend aus Decke und Kaschierung, in einem Kegelroller ausgebracht, zur Bonbonstrangstärke ausgezogen wird und zu einzelnen Bonbons geprägt.

Dieses Verfahren ist sehr arbeitsintensiv, da es satzweise durchgeführt werden muß und entsprechendes Personal zur Aufbereitung der Decke bzw. Kaschierung benötigt.

Schließlich ist es aber auch aus dem betriebsinternen Stand der Technik der Anmelderin bekannt, Hartbonbons mit kaschiertem Kern durch Einsatz der kontinuierlichen Hartzuckerherstellungsanlage der Anmelderin mit einem nachgeschalteten Transportband sowie einer kompletten Harbonbonprägestraße voll kontinuierlich, durchzuführen. Damit lassen sich die oben aufgeführten Mängel nicht ausreichend abstellen bzw. ist der Einsatz umfangreicher maschineller Anlagen erforderlich.

Die US 1 522 738 und die FR 1 442 989 zeigen ähnliche Einrichtungen, bei welchen ein ausgewalzter Zuckermassestrang mit einer Füllung versehen und anschließend hochgefaltet werden kann, so daß ein geschlossener Schlauch entsteht, der dann weiter verarbeitet werden kann. Der so entstandene Strang kann dann der kaschierte Kern eines Hartbonbons sein. Soll nun dieser Strang mit einer zusätzlichen Deckschicht versehen werden, ist eine ähnliche Einrichtung nachzuschalten, in welcher erneut ein Zuckermasseband ausgewalzt wird, auf welches der zuvor erzeugte kaschierte Kern aufzulegen ist, so daß dann Kern und Deckschicht weiterverarbeitet werden können.

Aufgabe der Erfingung ist es, die geschilderten Nachteile zu beheben und ein Verfahren und eine Vorrichtung zu entwickeln, die eine kontinuierliche Fertigung von Hartzuckerbonbons bei geringstem technischem Aufwand und höchster Leistung gewährleisten.

Dies wird erfindungsgemäß dadurch erreicht, daß parallel zueinander und ohne sich zu berühren, mehrere Zuckermassestränge auf ein kontinuierlich laufendes Temperierband aufgebracht werden, von denen mindestens einer zur Deckenbildung und mindestens ein weiterer zur Aufnahme der Füllmasse bestimmt ist, und die Stränge unabhängig voneinander auf die vorgesehene Dicke und Breite gebracht werden und daß auf mindestens einen zu kaschierenden Strang laufend Füllmasse aufgetragen und diese in den Strang seitliche derart eingerollt wird, daß ein in sich geschlossener Schlauch entsteht, der nach seiner Kalibrierung an den Deckenmassestrang, zwecks adhäsiver Verbindung, mit Kantenüberlappung seitlich herangerückt wird, worauf die so vorbereiteten Stränge gemeinsam in einen Strangformer (Kegelroller) eingeführt, ggf. horizontal weiter ausgezogen und der Prägemaschine zugeführt werden.

Eine dieses Verfahren durchführende Vorrichtung zur Bildung eines in einen Kegelroller einzuführenden Massestranges für die Herstellung von Hartbonbons mit kaschiertem Kern, der aus einem mit Füllmasse versehenen Zuckermasseband, welches zu einem geschlossenen Schlauch bzw. Rolle umgefaltet ist, gebildet ist, mit einem Temperierband, über welches aus einer Aufgabevorrichtung kommend, Zuckermasse in Strangform einem Kegelroller und einer Prägemaschine zugeführt werden, ist dadurch gekennzeichnet, daß das Temperierband eine Breite aufweist, die ein berührungsfreies Fördern mehrerer nebeneinanderliegender Zuckermassestränge gestattet und am Anfang der Bandförderung mehrere nebeneinanderliegende Aufgabestellen für Zuckermasse, dahinter Werkzeuge zum Auswalzen bzw. Ausformen der nebeneinanderliegenden Zuckermassestränge zu Bändern und Auftragdüsen für Füllmasse sowie Schaufeln vorgesehen sind, zum überführen des mit Füllmasse beschickten Zuckermassestrangs in eine die Füllung umschließende Rolle, und daß schließlich im weiteren Förderweg Werkzeuge vorgesehen sind, zum seitlichen, eine Kantenüberlappung ergebenden Aneinanderrücken mindestens eines kaschierten Stranges und eines Deckenmassestranges und zum gleichzeitigen überführen der so verbundenen Sträge in einen Kegelroller.

Als Decke kann beispielsweise auch ein Zuckermassestrang Verwendung finden, der eine Kaschierung enthält. Decke und Kaschierung können auch aufeinanderliegend in den Kegelroller eingeführt werden. Schließlich ist es auch mit der erfindungsgemäßen Einrichtung möglich, mehr als zwei Deckenmassestränge bzw. mehr als zwei kaschierte Stränge gleichzeitig durch die Vorrichtung hindurchzuführen. Von besonderer Bedeutung ist es, daß mehrere rezept- und mengenunterschiedliche Zuckerstränge verwendet werden, die auf das gemeinsame Temperierband abgelegt werden. Die einzelnen Stränge können unabhängig voneinander in jeder gewünschten Stärke und Breite ausgeformt werden.

Der Erfindungsgedanke läßt verschiedene Ausführungsmöglichkeiten zu. Eine davon ist schemamäßig in den anliegenden Zeichnungen wiedergegeben und in der folgenden Beschreibung erläutert. Es zeigen:

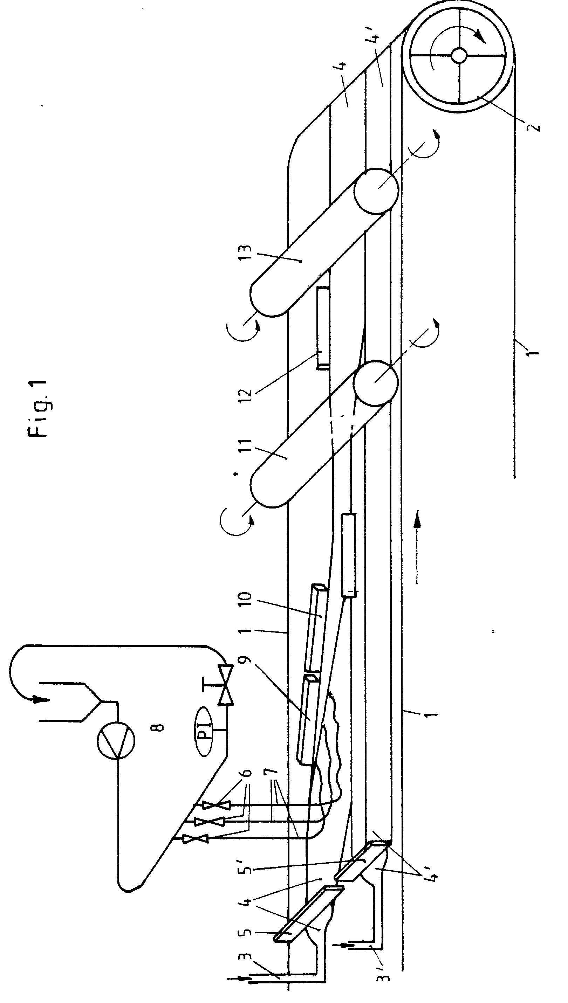

Fig. 1 Eine perspektivische Darstellung des Anfangsbereiches eine Temperierbandes;

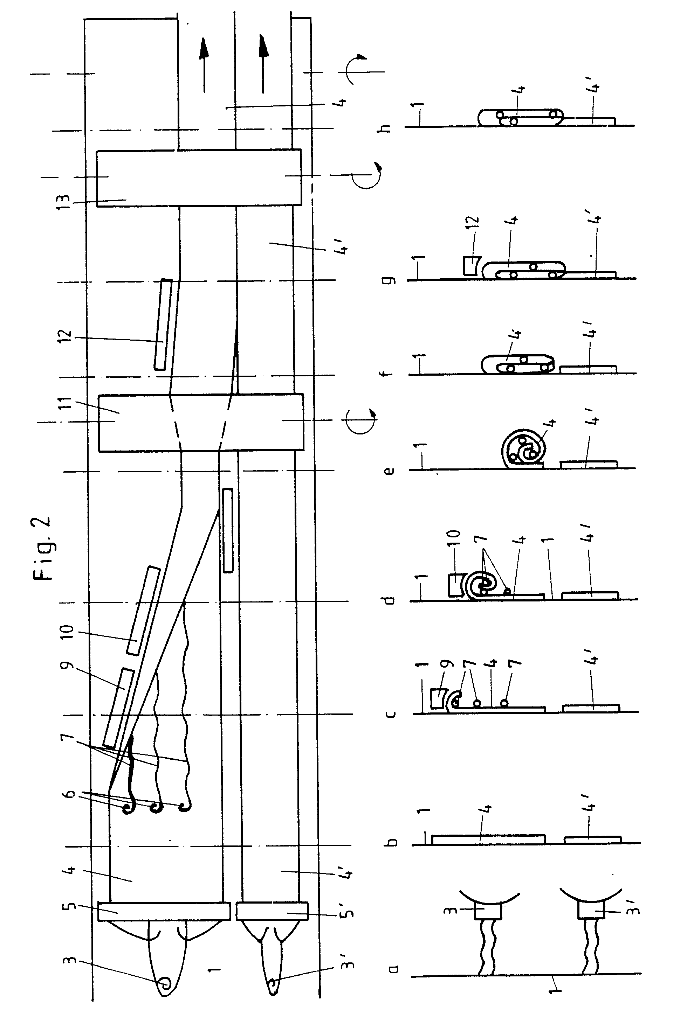

Fig. 2 den gleichen Teil des Temperierbandes in Draufsicht, wobei die Darstellungen a-h verschiedene Schnittansichten durch das Band und die Zuckermassestränge darstellen, um den Verlauf der Verformung der Stränge erkennbar zu machen und

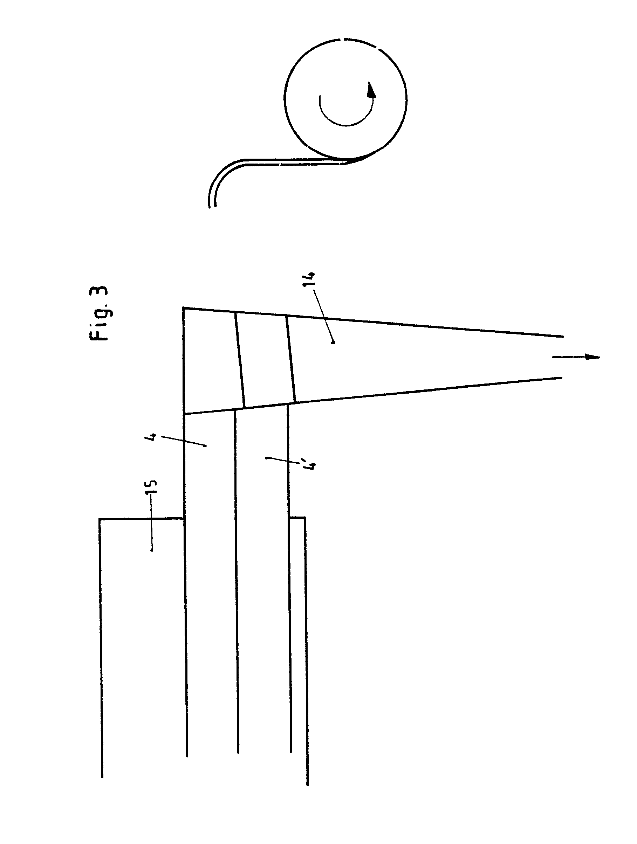

Fig. 3 eine schematische Darstellung des Einlaufes der Bänder in den Kegelroller.

Bei der Herstellung von Hartbonbons wird der kaschierte Kern aus mehrfachen Lagen von Zuckermasse und Füllmasse hergestellt, der Kernanteil kann bis über 50 Volumenprozent betragen, wobei eine dünne Zuckerlage den Kern voll umschließt. Bestandteil der Kaschiermasse sind üblicherweise gezogene bzw. belüftete oder unbelüftete Hartzuckermassen, sowie pastöse bis flüssige Füllungen, vorzugsweise auf Fettbasis, die in Schichten abwechselnd aufeinander liegen.

Wesentlicher Bestandteil der Fertigungseinrichtung ist ein endloses, über Rollen 2 laufendes Temperirband 1, vorzugsweise ein Metallband, von etwa 10 m Länge der Behandlungszone, in der je nach Fertigung eine Erwärmung der aufgegebenen Massen, insbesondere aber eine Kühlung erfolgen kann. Mittels verschiedener Aufgabevorrichtungen 3 bzw. 3', die an eine Zuckerkochanlage angeschlossen sind, erfolgt die Aufgabe von Zuckermassesträngen 4 bzw. 4', die mit dem kontinuierlich laufenden Band 1 weiterlaufen. Die Aufgabe der beiden Zuckermassestränge erfolgt parallel zueinander, ohne daß diese sich berühren. Dabei können sich die Zuckermassen der beiden Stränge je nach Bedarf in ihrer Rezeptur und ihrer Menge unterscheiden. Durch Einstellvorrichtungen 5 und 5' werden die Zuckermassen unabhängig voneinander auf die vorgesehene Dicke und Breite abgestuft.

Bei dem dargestellten Ausfertigungsbeispiel gelangen zwei Zuckermassestränge zur Anwendung. Der in Laufrichtung des Sandes 1 rechts eingeordnete Zuckermassenstrang 4' wird vorzugsweise als unbelüftete Masse zur Deckenbildung verwendet. Der linke Zuckermassenstrang 4 hingegen wird kontinuierlich belüftet und flächenmäßig breiter ausgeformt. Er wird nach einer bestimmten Länge über ein oberhalb des Temperierbandes 1 vorgesehenes Düsensystem 6 mit beispielsweise drei Strängen pastöser Füllmasse 7 belegt, die aus einer Aufbereitungsanlage 8 zugebracht wird. Selbstverständlich ist es möglich, die einzelnen Füllmassezuteilungen verschieden groß zu halten oder in verschiedener Art und Geschmacksrichtung auszuführen. Natürlich können die beiden Zuckermassestränge auch gegeneinander ausgetauscht werden, so daß der Deckenmassestrang links und der Strang mit Füllmasse rechts läuft.

Das Belegen mit Füllmasse erfolgt durch ein oder mehrere Düsen 6, aus denen die Füllmassen in Form von Produktsträngen auf die Zuckermassedecke mit einem einstellbaren Abstand zueinander aufgebracht werden. Mit Hilfe von speziell angefertigten Schaufeln 9 bzw. 10 wird die auf dem Band 1 liegende Zuckerdecke seitwärts in enger Rollenform eingeschlossen, wobei jeweils die einzelnen Füllungsstreifen getrennt voneinander eingerollt werden und schließlich von allen Seiten die Füllung mit Zucker umschließen.

Auf diese Weise entsteht ein völlig geschlossener Schlauch, in dem je nach Anzahl der Füllmassendüsen 6 spiralförmige Schichten von Füllmassen und Zucker eingebracht wurden. Dieser Schlauch wird mit einer Kalibrierwalze 11 auf die endgültige Stärke gewalzt und dann stufenförmig an den parallel durchlaufenden, unbelüfteten Deckenstrang 4' seitlich angelegt. Dies geschieht mittels der Leitorgane 12 und einer Walze 13, wobei die Anlegung beider Zuckerstränge 4, 4' durch überlappung an den Kanten derart erfolgt daß eine adhäsive Verbindung entsteht. Beide Stränge laufen kalibriert in Höhe und Breite gemeinsam über das Zuführband 15 am Ende der Temperierprägelinie, wobei eine exakte Führung der Deckenmasse zur Kaschiermasse vorgesehen ist.

Durch Aufrollen beider Massen im Kegelroller und horizontales Ausziehen durch die Ausziehmaschine, wird ein weiteres Verjüngen der einzelnen Schichten bewirkt, ständig umgeben von einer sich stetig verjüngenden Decke. Der endgültig kalibrierte Zuckerstrang mit seinem kaschierten Kern wird der Prägemaschine zugeführt und in einzeln geprägte Bonbons geteilt, die anschließend gekühlt werden. Die gekühlten Bonbons entsprechen der oben beschriebenen Arbeitsweise hinsichtlich Kaschiereffekt und Gleichmäßigkeit. Die mit den Buchstaben a-h bezeichneten Schnittdarstellungen lassen den hier geschilderten Verarbeitungsgang deutlich erkennen.

**Patentansprüche**

1. Verfahren zur Bildung eines in einen Legalroller einzuführenden Massestranges für die Herstellung von Hartbonbons mit kaschiertem Kern, der aus einem mit Füllmasse versehenen Zuckermasseband, welches zu einem geschlossenen Schlauch bzw. Rolle umgefaltet ist, gebildet ist, dadurch gekennzeichnet, daß parallel zueinander und ohne sich zu berühren, mehrere Zuckermassestränge auf ein kontinuierlich laufendes Temperierband aufgebracht werden, von denen mindestens einer zur Deckenbildung und mindestens ein weiterer zur Aufnahme der Füllmasse bestimmt ist, und die Stränge unabhängig voneinander auf die vorgesehene Dicke und Breite gebracht werden und daß auf mindestens einen zu kaschierenden Strang laufend Füllmasse aufgetragen und diese in den Strang seitlich derart eingerollt wird, daß ein in sich geschlossener Schlauch entsteht, der nach seiner Kalibrierung an den Deckenmassestrang, zwecks adhäsiver Verbindung, mit Kantenüberlappung seitlich herangerückt wird, worauf die so vorbereiteten Stränge gemeinsam in einen Strangformer (Kegelroller) eingeführt, ggf. horizontal weiter ausgezogen und der Prägemaschine zugeführt werden.

2. Verfahren nach Anspruch 1, dadurch gekennzeichnet, daß auf das Temperierband mehr als ein Deckenmassestrang bzw. Strang mit Kaschierung aufgebracht wird.

3. Verfahren nach Anspruch 1 und 2, dadurch gekennzeichnet, daß auch der Deckenmassestrang mit einer Kaschierung versehen wird.

4. Verfahren nach Anspruch 1 bis 3, dadurch gekennzeichnet, daß Deckenmassestrang und Kaschierung unmittelbar aufeinanderliegend in den Strangformer eingeführt werden.

5. Verfahren nach Anspruch 1 bis 4, dadurch gekennzeichnet, daß mehrere Füllmassestränge auf ein gemeinsames Zuckermasseband aufgegeben und getrennt voneinander eingerollt werden.

6. Vorrichtung zur Bildung eines in einen Kegelroller einzuführenden Missestranges für die Herstellung von Hartbonbons mit kaschiertem Kern, der aus einem mit Füllmasse versehenen Zuckermasseband, welches zu einem geschlossenen Schlauch bzw. Rolle umefaltet ist, gebildet ist, mit einem Temperierband, über welches aus einer Aufgabevorrichtung kommend, Zuckermasse in Strangform einem Kegelroller und einer Prägemaschine zugeführt werden, dadurch gekennzeichnet, daß das Temperierband (1) eine Breite aufweist, die ein berührungsfreies Fördern mehrerer nebeneinanderliegender Zuckermassestränge (4, 4') gestattet und am Anfang der Bandförderung mehrere nebeneinanderliegende Aufgabestellen (3, 3') für Zuckermasse, dahinter Werkzeuge (5, 5') zum Auswalzen bzw. Ausformen der nebeneinanderliegenden Zuckermassestränge (4, 4') zu Bändern und Auftragdüsen (6) für Füllmasse (7) sowie Schaufeln (9, 10) vorgesehen sind, zum überführen des mit Fümasse (7) beschickten Zuckermassestrangs (4) in eine die Füllung umschließende Rolle, und daß schließlich im weiteren Förderweg Werkzeuge (12) vorgesehen sind, zum seitlichen, eine Kantenüberlappung ergebenden aneinanderrücken mindestens eines kaschierten Stranges (4) und eines Deckenmassestranges (4') und zum gleichzeitigen Überführen der so verbundenen Stränge (4, 4') in einen Kegelroller (14).

7. Vorrichtung nach Anspruch 6, dadurch gekennzeichnet, daß die Werkzeuge zum Auswalzen, Ausformen oder Ausziehen der einzelnen Massestränge unabhängig voneinander verstellbar sind.

8. Vorrichtung nach Anspruch 6 und 7, dadurch gekennzeichnet, daß einem Massestrang mehrere Düsen (6) für Füllmasse (7) zugeordnet und diese unabhängig voneinander einstellbar bzw. in ihrem, gegenseitigen Abstand veränderbar sind.

**Claims**

1. Method for the formation of a mass strand which is to be introduced into a conical roller for the production of hard sweets with coated core and is formed of a sugar mass band which is provided with a filling mass and folded over into a closed hose or roll, characterised thereby, that several sugar mass strands are applied, one parallelly to the other and without touching, onto a continuously running tempering belt, of which at least one is intended for the formation of the cover and at least a further one is intended for the reception of the filling mass, and the strands are brought one independently of the other to the envisaged thickness and width and that filling mass is continuously applied onto at least one strand to be laminated and rolled laterally into the strand in such a manner that a closed hose arises, which after its calibration is moved laterally for the purpose of adhesive connection against the cover mass strand with edge overlapping, whereupon the thus prepared strands are introduced together into a strand former, in a given case further drawn out horizontally, and conducted to the embossing machine.

2. Method according to claim 1, characterised thereby, that more than one cover mass strand or strand with coating is applied onto the tempering belt.

3. Method according to claim 1 and 2, characterised thereby, that also the cover mass strand is provided with a coating.

4. Method according to claim 1 to 3, characterised thereby, that cover mass strand and coating are introduced into the strand former while lying one directly on the other.

5. Method according to claim 1 to 4, characterised thereby, that several filling mass strands are put onto a common sugar mass belt and rolled in one separately from the other.

6. Device for the formation of a mass strand which is to be introduced into a conical roller for the production of hard sweets with coated core and is formed of a sugar mass band which is provided with a filling mass and folded over into a closed hose or roll, with a tempering belt, by way of which sugar mass coming out of a charging device is conducted in strand shape to a conical roller and an embossing machine, characterised thereby, that the tempering belt (1) displays a width which permits a contact-free conveying of several sugar mass strands (4, 4') lying one beside the other and several charging places (3, 3') lying one beside theother for sugar mass are provided at the beginning of the belt conveyor, tools (5, 5') for the rolling-out or shaping-out of the sugar mass strands (4, 4') lying one beside the other into bands and charging nozzles (6) for filling mass (7) as well as blades (9, 10) for the transfer of the sugar mass strand (4) into a roll enclosing the filling mass (7) being provided therebehind, and that finally tools (12) are provided in the further conveying path for the lateral moving one against the other and resulting in an edge overlapping of at least one laminated strand (4) and one cover mass strand (4') and for the simultaneous transfer of the thus connected strands (4, 4') into a conical roller (14).

7. Device according to claim 6, characterised thereby, that the tools for the rolling-out, shaping-out or drawing-out of the individual mass strands are resettable one independently of the other.

8. Device according to claim 6 and 7, characterised thereby, that several nozzles (6) for filling mass (7) are associated with one mass strand and these are variable in their mutual spacing or settable one independently of the other.

## Revendications

1. Procédé pour la formation d'un boudin de matières à introduire dans un jeu de rouleaux cônique ou similaire pour la fabrication de bonbons durs avec noyau fourré qui est formé d'un ruban de sucre comportant un fourrage qui est replié pour former un tube fermé, c'est-à-dire un rouleau, caractérisé par le fait que plusieurs boudins de sucre sont disposés parallèlement entre eux et sans se toucher sur une bande de maintien en température en mouvement continu, dont au moins l'un d'eux est destiné à former la couverture et dont au moins un autre est destiné à recevoir le fourrage, que les boudins sont amenés indépendamment les une des autres à l'épaisseur et à la largeur prévues, que sur au moins un des boudins destinés à être fourré ou fait un apport de matière de fourrage et que cet apport est enroulé dans le boudin par le côté de sorte qu'un tube fermé sur lui-même est constitué, et que ce dernier après calandrage contre le boudin de matière de couverture, en vue d'obtenir une liaison adhésive est déplacé latéralement avec chevauchement des bords, avant que les boudins ainsi préparés ne soient introduits ensemble dans un conformateur de boudin (système de rouleaux côniques), le cas échéant encore étirés horizontalement et amenés à une presse.

2. Procédé selon la revendication 1, caractérisé par le fait que sur la bande de maintien en température on dispose plus d'un boudin de matière de couverture, c'est-à-dire de boudins avec fourrage.

3. Procédé selon la revendication 1 ou 2, caractérisé par le fait que le boudin de matière de couverture est également muni d'un fourrage.

4. Procédé selon les revendications 1 à 3, caractérisé par le fait que le boudin de matière de couverture et le fourrage sont introduits dans le conformateur de boudin, disposés immédiatement l'un sur l'autre.

5. Procédé selon les revendications 1 à 4, caractérisé par le fait que plusieurs boudins de matière de fourrage sont délivrés sur un ruban de masse de sucre commun et sont enroulés séparément les une des autres.

6. Appareil pour la formation d'un boudin de matière à introduire dans un jeu de rouleaux côniques pour la fabrication de bonbons durs, avec noyau fourré, formé d'un ruban de sucre muni d'une matière de fourrage, replié pour former un tube fermé, c'est-à-dire un rouleau, comportant une bande de maintien en température par laquelle le sucre est amené, en provenance d'un dispositif d'alimentation, sous forme de boudin dans un jeu de rouleaux côniques et une presse, caractérisé par le fait que, la bande de maintien en température (1) présentant une largeur qui permet le transport sans contact de plusieurs boudins (4, 4') de sucre disposés les une à côté des autres, qu'au début du dispositif de bande transporteuse, il comporte plusieurs postes de distribution (3, 3') pour le sucre disposés les uns à côté des autres, des outils (5, 5') pour le calandrage c'est-à-dire la conformation des boudins de sucre (4, 4') disposés les une à côté des autres, en forme de rubans, des buses de distribution (6) pour la matière de fourrage (7) ainsi que des spatules (9, 10) pour transformer le boudin (4) de sucre muni du fourrage (7) en un rouleau entourant le fourrage, et enfin sur le trajet de transport ultérieur des outils (12) pour le déplacement latéral l'un contre l'autre avec chevauchement des bords d'au moins un boudin fourré (4) et d'un boudin (4') de matière de couverture et pour l'introduction simultanée des boudins (4, 4') ainsi reliés, dans un jeu de rouleaux côniques (14).

7. Appareil selon la revendication 6, caractérisé par le fait que les outils de calandrage, de formage ou d'étirage des différents boudins de masse sont réglables indépendamment les une des autres.

8. Appareil selon la revendication 6 ou 7, caractérisé par le fait que plusieurs buses (6) pour fourrage (7) sont affectées à un boudin de matière et que celles-ci sont réglables indépendamment l'une de l'autre, c'est-à-dire qu'on peut faire varier leurs écarts respectifs.

Fig. 1

0 130 446

Fig. 2

Fig. 3